# EUROPEAN PATENT SPECIFICATION

(11) **EP 1 518 293 B1**
(45) Date of publication and mention of the grant of the patent: **29.06.2016**
(21) Application number: 03761909.5
(22) Date of filing: 22.05.2003
(51) Int. Cl.: H01M 4/14, H01M 4/66, H01M 4/80

(54) **BATTERY INCLUDING CARBON FOAM CURRENT COLLECTORS**
BATTERIE EINSCHLIESSLICH KOHLENSTOFFSCHAUM STROM KOLLEKTOR
ACCUMULATEUR COMPRENANT DES COLLECTEURS DE COURANT EN MOUSSE DE CARBONE

(30) Priority: 28.06.2002 US 183471
(43) Date of publication of application: 30.03.2005
(73) Proprietor: Firefly Energy Inc., Peoria, IL 61614 (US)
(72) Inventor: KELLEY, Kurtis C., Saint George, ME 04860 (US); VOTOUPAL, John, J., Hudson, IL 61748 (US)
(74) Representative: Giannesi, Simona
(86) International application number: PCT/US2003/016262
(87) International publication number: WO 2004/004027

(56) References cited:
- WO-A-94/23462
- WO-A-95/06002
- WO-A-02/081407
- WO-A-03/100887
- US-A- 5 508 341
- US-A- 5 512 390
- US-A- 5 626 977
- US-A- 5 908 896

## Description

### Technical Field

This invention relates generally to current collectors for a battery and, more particularly, to carbon foam current collectors for a lead acid battery.

### Background

Lead acid batteries are known to include at least one positive current collector, at least one negative current collector, and an electrolytic solution including, for example, sulfuric acid (H₂SO₄) and distilled water. Ordinarily, both the positive and negative current collectors in a lead acid battery are constructed from lead. The role of these lead current collectors is to transfer electric current to and from the battery terminals during the discharge and charging processes. Storage and release of electrical energy in lead acid batteries is enabled by chemical reactions that occur in a paste disposed on the current collectors. The positive and negative current collectors, once coated with this paste, are referred to as positive and negative plates, respectively. A notable limitation on the durability of lead-acid batteries is corrosion of the lead current collector of the positive plate.

The rate of corrosion of the lead current collector is a major factor in determining the life of the lead-acid battery. Once the sulfuric acid electrolyte is added to the battery and the battery is charged, the current collector of each positive plate is continually subjected to corrosion due to its exposure to sulfuric acid and to the anodic potentials of the positive plate. One of the most damaging effects of this corrosion of the positive plate current collector is volume expansion. Particularly, as the lead current collector corrodes, lead dioxide is formed from the lead source metal of the current collector. Moreover, this lead dioxide corrosion product has a greater volume than the lead source material consumed to create the lead dioxide. Corrosion of the lead source material and the ensuing increase in volume of the lead dioxide corrosion product is known as volume expansion.

Volume expansion induces mechanical stresses on the current collector that deform and stretch the current collector. At a total volume increase of the current collector of approximately 4% to 7%, the current collector may fracture. As a result, battery capacity may drop, and eventually, the battery will reach the end of its service life. Additionally, at advanced stages of corrosion, internal shorting within the current collector and rupture of the cell case may occur. Both of these corrosion effects may lead to failure of one or more of the cells within the battery.

One method of extending the service life of a lead acid battery is to increase the corrosion resistance of the current collector of the positive plate. Several methods have been proposed for inhibiting the corrosion process in lead acid batteries. Because carbon does not oxidize at the temperatures at which lead-acid batteries generally operate, some of these methods have involved using carbon in various forms to slow or prevent the detrimental corrosion process in lead acid batteries. For example, U.S. Patent No. 5,512,390 (hereinafter the '390 patent) discloses a lead acid battery that includes current collectors made from graphite plates instead of lead. The graphite plates have sufficient conductivity to function as current collectors, and they are more corrosion resistant than lead. Substituting graphite plates for the lead current collectors may, therefore, lengthen the life of a lead-acid battery.

While the battery of the '390 patent may potentially offer a lengthened service life as a result of reduced corrosion at the positive plate, the graphite plates of the '390 patent are problematic. For example, the graphite plates of the '390 patent are dense, flat sheets of material each having a relatively small amount of surface area. Unlike lead electrode plates of a conventional lead-acid battery, which are generally patterned into a grid-like structure to increase the available surface area of the plates, the graphite plates of the '390 patent are smooth sheets with no patterning. In lead acid batteries, an increase in surface area of the current collector may increase the specific energy of the battery and, therefore, may translate into improved battery performance. More surface area on the current collectors may also lead to a reduction in the time required for charging and discharging of the battery. The relatively small surface area of the graphite plates of the '390 patent results in poorly performing batteries that have slow charging speeds.

Additionally, the graphite plates of the '390 patent lack the toughness of lead current collectors. The dense, graphite plates of the '390 patent are brittle and may fracture when subjected to physical shock or vibration. Such physical shock and vibration commonly occur in vehicular applications, for example. Any fracturing of the graphite plates would lead to the same problems caused by volume expansion of ordinary lead current collectors. Therefore, despite offering an increased resistance to corrosion compared to conventional lead current collectors, the brittle nature of the graphite plates of the '390 patent could actually result in battery service lives shorter than those possible through use of ordinary lead current collectors.

The present invention is directed to overcoming one or more of the problems or disadvantages existing in the prior art.

WO 9423462 discloses a polymeric foam precursor, wetted with phosphoric acid, that is pyrolyzed in an inert atmosphere to produce an open-cell doped carbon foam, which is utilized as a lithium intercalation anode in a secondary, organic electrolyte battery.

WO 9506002 discloses a method for fabricating thin, flat carbon electrodes by infiltrating highly porous carbon papers, membranes, felts, metal fibers/powders, or fabrics with an appropriate carbon foam precursor material. Precursor materials include polyacrylonitrile (PAN), polymethylacrylonitrile (PMAN), resorcinol/formaldehyde, catechol/formaldehyde, phenol/formaldehyde, etc., or mixtures thereof.

US 5626977 discloses a composite carbon foam electrode in which are incorporated granularized materials. The granularized materials, solid particles, or microspheres added to the precursor materials may include: 1) carbon aerogel microspheres, 2) crushed powderized carbon aerogel, 3) powderized activated or non-activated carbon or any other source type, and 4) metal and/or metal oxide powders or spheres.

US 5 908 896 A discloses an organic aerogel microsphere. US 5 508 341 A discloses a method for fabricating organic aerogel microspheres. US 5 512 390 A discloses an electrical-storage battery. WO 02/081 407 A discloses a method of making carbon foam. WO 03/100 887 A discloses a method of forming a corrosion resistant electrode for a battery.

### Summary of the Invention

According to the present invention, an electrode plate for a battery as claimed in claim 1 is provided. A method of making an electrode plate according to the present invention is claimed in claim 5. The dependent claims show some examples of such an electrode plate or method, respectively.

One aspect of the present invention includes an electrode plate for a battery. The electrode plate includes a carbon foam current collector that has a network of pores. A chemically active paste is disposed on the carbon foam current collector such that the chemically active paste penetrates into the network of pores.

A second aspect of the present invention includes a method of making an electrode plate for a lead acid battery. This method includes forming a current collector from carbon foam. The carbon foam current collector includes a protruding tab and a network of pores. An electrical connection is then formed at the protruding tab of the current collector. The method also includes applying a chemically active paste to the current collector such that the chemically active paste penetrates the network of pores in the carbon foam.

A third aspect of the present invention includes a lead-acid battery. This battery includes a housing, and positive and negative terminals external to the housing. Within the housing is at least one cell that includes at least one positive plate and at least one negative plate connected to the positive terminal and negative terminal, respectively. An electrolytic solution fills a volume between the positive and negative plates. The at least one positive plate includes a carbon foam current collector including a network of pores, and a chemically active paste disposed on the carbon foam current collector such that the chemically active paste penetrates the network of pores

### Brief Description of the Drawings

The accompanying drawings, which are incorporated in and constitute a part of this specification, illustrate exemplary embodiments of the invention and, together with the written description, serve to explain the principles of the invention. In the drawings:
Fig. 1 is a diagrammatic cut-away representation of a battery in accordance with an exemplary embodiment of the present invention;
Figs. 2A and 2B are photographs of a current collector in accordance with an exemplary embodiment of the present invention;
Fig. 3 is a photograph of the porous structure of a carbon foam current collector, at about 10x magnification, in accordance with an exemplary embodiment of the present invention; and
Fig. 4 is a diagrammatic, close-up representation of the porous structure of a carbon foam current collector in accordance with an exemplary embodiment of the present invention.

### Detailed Description

In the following description, reference is made to the accompanying drawings that form a part thereof, and in which is shown by way of illustration specific exemplary embodiments in which the invention may be practiced. These embodiments are described in sufficient detail to enable those skilled in the art to practice the invention, and it is to be understood that other embodiments may be utilized and that changes may be made without departing from the scope of the present invention. The following description is, therefore, not to be taken in a limited sense. Wherever possible, the same reference numbers are used throughout the drawings to refer to the same or like parts.

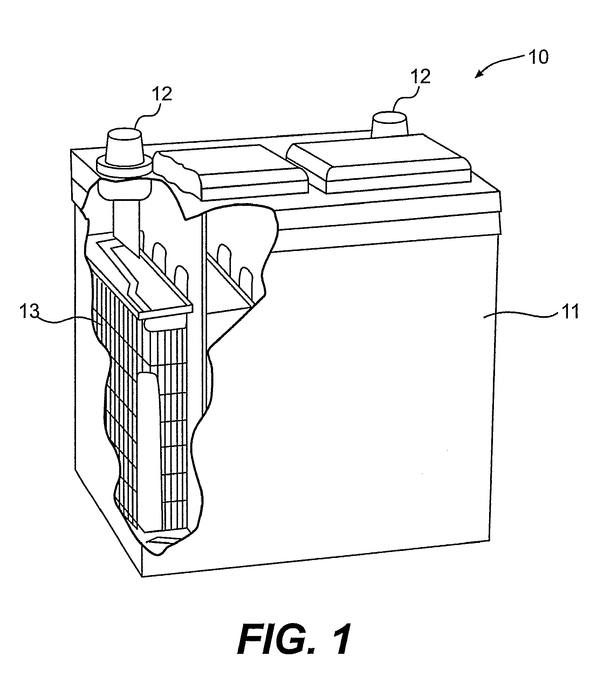

Fig. 1 illustrates a battery 10 in accordance with an exemplary embodiment of the present invention. Battery 10 includes a housing 11 and terminals 12, which are external to housing 11. At least one cell 13 is disposed within housing 11. While only one cell 13 is necessary, multiple cells may be connected in series to provide a desired total potential of battery 10.

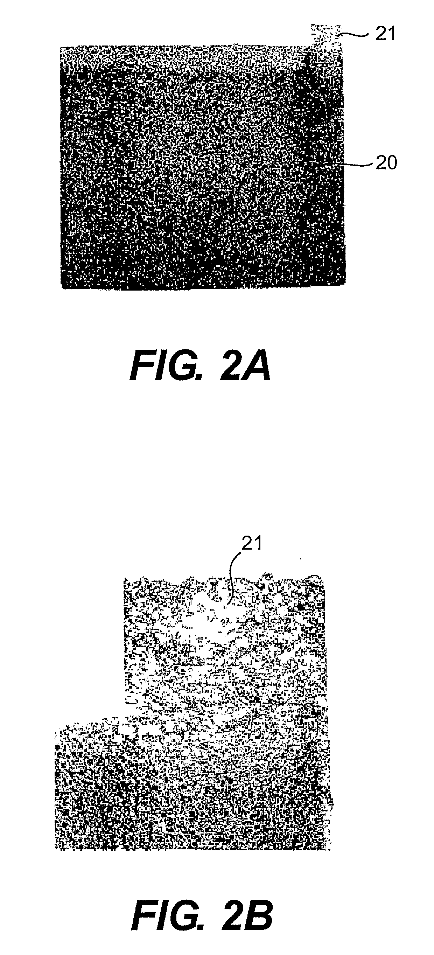

Each cell 13 may be composed of alternating positive and negative plates immersed in an electrolytic solution including, for example, sulfuric acid and distilled water. Both the positive and negative plates include a current collector packed with a paste material, including, for example, an oxide of lead. Fig. 2A illustrates a current collector 20 according to an exemplary embodiment of the present invention. Current collector 20 includes a thin, rectangular body and a tab 21 used to form an electrical connection with current collector 20.

The current collector shown in Fig. 2A may be used to form either a positive or a negative plate. As previously stated, chemical reactions in the paste disposed on the current collectors of the battery enable storage and release of energy. The composition of this paste, and not the material selected for the current collector, determines whether a given current collector functions as either a positive or a negative plate.

While the type of plate, whether positive or negative, does not depend on the material selected for current collector 20, the current collector material and configuration affects the characteristics and performance of battery 10. For example, during either the charging and discharging processes, each current collector 20 transfers the resulting electric current to and from battery terminals 12. In order to efficiently transfer current to and from terminals 12, current collector 20 must be formed from a conductive material. Additionally, the susceptibility of the current collector material to corrosion will affect not only the performance of battery 10, but it will also impact the service life of battery 10. In addition to the material selected for the current collector 20, the configuration of current collector 20 is also important to battery performance. For instance, the amount of surface area available on current collector 20 influences both the specific energy and the charge/discharge rates of the battery 10.

In an exemplary embodiment of the present invention, current collector 20, as shown in Fig. 2A, is formed from of a porous, carbon foam material. Because the foam is carbon, it resists corrosion even when exposed to sulfuric acid and to the anodic potentials of the positive plate. The carbon foam includes a network of pores, which provides a large amount of surface area for each current collector 20. Current collectors composed of carbon foam may exhibit more than 2000 times the amount of surface area provided by conventional lead current collectors. Fig. 2B illustrates a closer view of tab 21 formed on current collector 20. Tab 21 may be coated with a conductive material and used to form an electrical connection with the current collector 20. The conductive material used to coat tab 21 may include a metal that is more conductive than the carbon foam current collector. Coating tab 21 with a conductive material provides structural support for tab 21 and creates a suitable electrical connection capable of handling the high currents present in a lead acid battery.

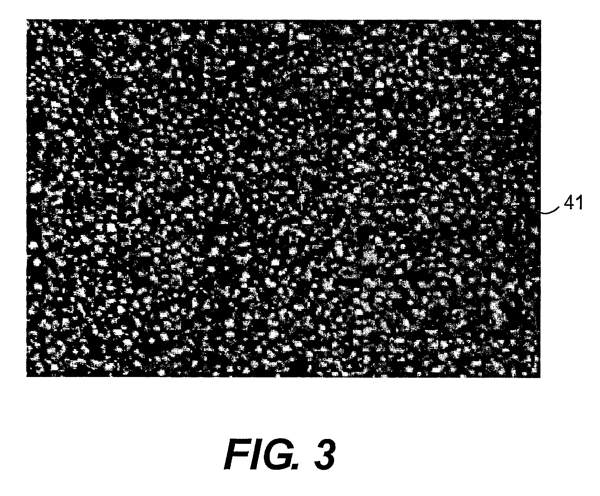

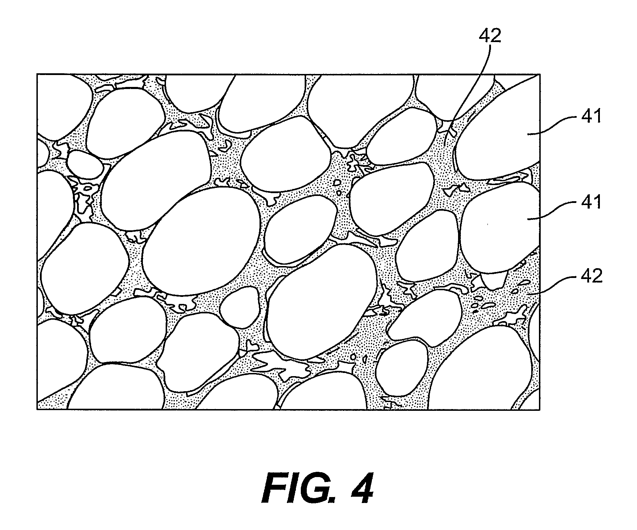

Fig. 3 provides a view of current collector 20, including the network of pores, at approximately 10x magnification. Fig. 4 provides an even more detailed representation (approximately 100x magnification) of the network of pores. The carbon foam of the exemplary embodiment includes from about 4 to about 50 pores per centimeter, and a total porosity value for the carbon foam may be at least 60%. In other words, at least 60% of the volume of the carbon foam structure is included within pores 41. Moreover, the carbon foam may have an open porosity value of at least 90%. Therefore, at least 90% of pores 41 are open to adjacent pores such that the network of pores 41 forms a substantially open network. This open network of pores 41 allows the paste deposited on each current collector 20 to penetrate within the carbon foam structure. In addition to the network of pores 41, the carbon foam includes a web of structural elements 42 that provide support for the carbon foam. Combined, the network of pores 41 and the structural elements 42 of the carbon foam result in a density of less than about 0.6 gm/cm³ for the carbon foam material.

Due to the high conductivity of the carbon foam of the present invention, current collectors 20 efficiently transfer current to and from the battery terminals 12.

In addition to carbon foam, graphite foam may also be used to form current collector 20. One such graphite foam, under the trade name PocoFoam™, is available from Poco Graphite, Inc. The density and pore structure of graphite foam may be similar to carbon foam. A primary difference between graphite foam and carbon foam is the orientation of the carbon atoms that make up the structural elements 42. For example, in carbon foam, the carbon may be primarily amorphous. In graphite foam, however, much of the carbon is ordered into a graphite, layered structure. Because of the ordered nature of the graphite structure, graphite foam offers higher conductivity than carbon foam.

In an exemplary embodiment of the present invention, current collector 20 may be made from either carbon foam or from graphite foam. Because corrosion affects primarily current collector 20 of the positive plate, however, the current collector of the negative plate may be formed of a material other than carbon or graphite foam. For example, the current collector of the negative plate may be made of lead or another suitable conductive material.

The process for making an electrode plate for a lead acid battery according to the present invention begins by forming current collector 20. To form current collector 20, a block of carbon foam may be machined into thin sheets. While any form of mechanical machining, such as, for example, band sawing, may be used to form thin sheets of carbon foam, wire EDM (electrical discharge machining) provides a method that better preserves the open-cell structure of the carbon foam. In wire EDM, conductive materials are cut with a thin wire surrounded by de-ionized water. There is no physical contact between the wire and the part being machined. Rather, the wire is rapidly charged to a predetermined voltage, which causes a spark to bridge a gap between the wire and the work piece. As a result, a small portion of the work piece melts. The de-ionized water then cools and flushes away the small particles of the melted work piece. Because no cutting forces are generated by wire EDM, the carbon foam of the present invention may be machined without causing the network of pores 41 to collapse. By preserving pores 41 on the surface of the current collector, chemically active paste may penetrate more easily into current collector 20.

As shown in Fig. 2A, current collector 20 includes tab 21, which is used to form an electrical connection to current collector 20. The electrical connection of current collector 20 may be required to carry currents of up to about 100 amps or even greater. In order to form an appropriate electrical connection capable of carrying such currents, the carbon foam that forms tab 21 may be pre-treated by a method that causes a conductive material, such as a metal, to wet the carbon foam. Such methods may include, for example, electroplating and thermal spray techniques. While both of these techniques may be suitable, thermal spray may offer the added benefit of enabling the conductive metal to penetrate deeper into the porous network of the carbon foam. In an exemplary embodiment of the present invention, silver may be applied to tab 21 by thermal spray to form a carbon-metal interface. In addition to silver, other conductive materials may be used to form the carbon-metal interface depending on a particular application.

Once a carbon-metal interface has been established at tab 21, a second conductive material may be added to the tab 21 to complete the electrical connection. For example, a metal such as lead may be applied to tab 21. In an exemplary embodiment, lead wets the silver-treated carbon foam in a manner that allows enough lead to be deposited on tab 21 to form a suitable electrical connection.

After forming the electrical connection at tab 21, a chemically active paste is applied to current collector 20 such that the chemically active paste penetrates the network of pores in the carbon foam. One exemplary method for applying the chemically active paste to current collector 20 includes spreading the paste onto a transfer sheet, folding the transfer sheet including the paste over the current collector 20, and applying pressure to the transfer sheet to force the chemically active paste into pores 41. Pressure for forcing the paste into pores 41 may be applied by a roller, mechanical press, or other suitable device.

Initially, the chemically active paste that is applied to the current collectors 20 of both the positive and negative plates may be substantially the same in terms of chemical composition. For example, the paste may include lead oxide (PbO). Other oxides of lead may also be suitable. The paste may also include various additives including, for example, varying percentages of free lead, structural fibers, conductive materials, carbon, and extenders to accommodate volume changes over the life of the battery. In practice, the constituents of the chemically active paste may be mixed with a small amount of sulfuric acid and water to form a paste that may be disposed within pores 41 of the current collector 20.

Once the paste has been deposited on the current collectors 20, the positive and negative plates are formed. To create a positive plate, a current collector 20 including lead oxide paste, for example, is subjected to a curing process. This curing process may include exposing the pasted current collector 20 to elevated temperature and humidity to encourage growth of lead sulfate crystals within the paste. To create the negative plate, however, the current collector 20 including the lead oxide paste may be left "as is", with the exception of an optional step of drying.

When the positive and negative plates have been assembled together to form the cells of a battery 10 (shown in Fig. 1), the battery 10 is subjected to a charging (i.e., formation) process. During this charging process, the cured paste of the positive plate is electrically driven to lead dioxide (PbO₂), and the paste of the negative plate is converted to sponge lead. Conversely, during subsequent discharge of the battery 10, the pastes of both positive and negative plates convert toward lead sulfate.

### Industrial Applicability

By incorporating carbon into the electrode plates of the battery 10 of the present invention, corrosion of the current collector 20 of the positive electrode plate may be suppressed. As a result, the battery of the present invention may offer significantly longer service lives.

Additionally, the large amount of surface area associated with the carbon foam or graphite foam materials forming current collectors 20 translates into batteries having large specific energy values. Specifically, because of the open cell, porous network and relatively small pore size of the carbon foam materials, the chemically active paste of the positive and negative plates is intimately integrated with the current collectors 20. The reaction sites in the chemically active paste are close to one or more conductive, carbon foam structural elements 42. Therefore, electrons produced in the chemically active paste at a particular reaction site must travel only a short distance through the paste before encountering one of the many highly conductive structural elements 42 of the current collector 20. As a result, batteries with carbon foam current collectors 20 may offer improved specific energy values. In other words, these batteries, when placed under a load, may sustain their voltage above a predetermined threshold value for a longer time than batteries including either lead current collectors or graphite plate current collectors.

The increased specific energy values offered by batteries of the present invention also translate into reduced charging times. Therefore, the batteries of the present invention may be suitable for applications in which charging energy is available for only a limited amount of time. For instance, in vehicles, a great deal of energy is lost during ordinary braking. This braking energy may be recaptured and used to charge a battery of, for example, a hybrid vehicle. The braking energy, however, is available only for a short period of time (i.e., while braking is occurring). Thus, any transfer of braking energy to a battery must occur during braking. In view of their reduced charging times, the batteries of the present invention may provide an efficient means for storing such braking energy.

Additionally, the carbon foam current collectors of the present invention are pliable, and therefore, they may be less susceptible to damage from vibration or shock as compared to current collectors made from graphite plates or other brittle materials. Therefore, batteries including carbon foam current collectors may perform well in vehicular applications, or other applications, where vibration and shock are common.

Further, by including carbon foam current collectors having a density of less than about 0.6 g/cm³, the battery of the present invention may weigh substantially less that batteries including either lead current collectors or graphite plate current collectors. Other aspects and features of the present invention can be obtained from a study of the drawings, the disclosure, and the appended claims.

## Claims

1. An electrode plate for a battery (10), comprising:
a carbon foam or graphite foam current collector (20) including a network of pores (41), and
a chemically active paste disposed on the carbon foam or graphite foam current collector such that the chemically active paste penetrates into the network of pores, wherein the chemically active paste comprises lead oxide or other oxides of lead.

2. The electrode plate of claim 1, wherein the carbon foam or graphite foam current collector has a total porosity value of at least 60%, an open porosity value of at least 90%, and a density of less than about 0.6 g/cm³.

3. A battery (10) including: at least one electrode plate
a housing (11);
a positive terminal (12) and a negative terminal (12) external to the housing;
at least one cell (13) disposed within the housing and including at least one positive electrode plate, according to any one of claims 1-2, and at least one negative plate connected to the positive terminal and negative terminal, respectively; and
an electrolytic solution filling a volume between the positive and negative plates.

4. A battery (10) according to claim 3, wherein
the at least one negative plate is made according to anyone of claims 1-2.

5. A method of making an electrode plate for a lead acid battery comprising:
forming a current collector from carbon foam or graphite foam, wherein the current collector includes a tab, and the carbon foam or graphite foam includes a network of pores;
forming an electrical connection at the tab of the current collector;
applying a chemically active paste to the current collector such that the chemically active paste penetrates the network of pores in the carbon foam, wherein the chemically active paste comprises lead oxide or other oxides of lead.

6. The method of claim 5, wherein the step of forming the electrical connection further includes:
applying a first conductive material to the tab, and
applying a second conductive material to the first conductive material.

7. The method of claim 6, wherein the first conductive material includes silver and is applied to the tab in the form of a thermal spray, and the second conductive material includes lead.

## Patentansprüche

1. Elektrodenplatte für eine Batterie (10), umfassend:
- einen Kohlenstoffschaum- oder Graphitschaum-Stromkollektor (20), aufweisend ein Netzwerk von Poren (41), und
- eine chemisch aktive Paste, die auf dem Kohlenstoffschaum- oder Graphitschaum-Stromkollektor derart angeordnet ist, dass die chemisch aktive Paste in das Netzwerk von Poren eindringt, wobei die chemisch aktive Paste Bleioxid oder andere Oxide von Blei umfasst.

2. Elektrodenplatte nach Anspruch 1, wobei der Kohlenstoffschaum- oder Graphitschaum-Stromkollektor einen Gesamtporositätswert von mindestens 60 %, einen offenen Porositätswert von mindestens 90 % und eine Dichte von weniger als ca. 0,6 g/cm³ aufweist.

3. Batterie (10), aufweisend:
- mindestens eine Elektrodenplatte;
- ein Gehäuse (11);
- einen positiven Anschluss (12) und einen negativen Anschluss (12) außerhalb des Gehäuses;
- mindestens eine Zelle (13), die innerhalb des Gehäuses angeordnet ist und mindestens eine positive Elektrodenplatte gemäß einem beliebigen der Ansprüche 1 bis 2 aufweist, und mindestens eine negative Platte, die jeweils an den positiven Anschluss und den negativen Anschluss angeschlossen ist; und
- eine Elektrolytlösung, die ein Volumen zwischen der positiven und der negativen Platte füllt.

4. Batterie (10) nach Anspruch 3, wobei
die mindestens eine negative Platte nach einem beliebigen der Ansprüche 1 bis 2 hergestellt ist.

5. Verfahren zum Herstellen einer Elektrodenplatte für eine Blei-Säure-Batterie, umfassend:
- Herstellen eines Stromkollektors aus Kohlenstoffschaum oder Graphitschaum, wobei der Stromkollektor einen Streifen aufweist und der Kohlenstoffschaum oder Graphitschaum ein Netzwerk von Poren aufweist;
- Herstellen einer elektrischen Verbindung an dem Streifen des Stromkollektors;
- Aufbringen einer chemisch aktiven Paste auf den Stromkollektor derart, dass die chemisch aktive Paste in das Netzwerk von Poren in dem Kohlenstoffschaum eindringt, wobei die chemisch aktive Paste Bleioxid oder andere Oxide von Blei umfasst.

6. Verfahren nach Anspruch 5, wobei der Schritt des Herstellens der elektrischen Verbindung ferner aufweist:
- Aufbringen eines ersten elektrisch leitenden Materials auf den Streifen und
- Aufbringen eines zweiten elektrisch leitenden Materials auf das erste elektrisch leitende Material.

7. Verfahren nach Anspruch 6, wobei das erste elektrisch leitende Material Silber aufweist und auf den Streifen in Form von thermischem Sprühen aufgebracht wird und das zweite elektrisch leitende Material Blei aufweist.

## Revendications

1. Plaque d'électrode pour une batterie (10), comprenant :
un collecteur de courant en mousse de carbone ou mousse de graphite (20) comprenant un réseau de pores (41), et
une pâte chimiquement active disposée sur le collecteur de courant en mousse de carbone ou mousse de graphite de manière que la pâte chimiquement active pénètre dans le réseau de pores, dans laquelle la pâte chimiquement active comprend de l'oxyde de plomb ou d'autres oxydes de plomb.

2. Plaque d'électrode selon la revendication 1, dans laquelle le collecteur de courant en mousse de carbone ou mousse de graphite a une valeur de porosité totale d'au moins 60%, une valeur de porosité ouverte d'au moins 90%, et une densité de moins d'environ 0,6 g/cm³.

3. Batterie (10) comprenant : au moins une plaque d'électrode un boîtier (11) ;
une borne positive (12) et une borne négative (12) externes au boîtier ;
au moins un élément (13) disposé à l'intérieur du boîtier et comprenant au moins une plaque d'électrode positive, selon l'une quelconque des revendications 1 à 2, et au moins une plaque négative connectées respectivement à la borne positive et à la borne négative ; et
une solution électrolytique remplissant un volume entre les plaques positive et négative.

4. Batterie (10) selon la revendication 3, dans laquelle
l'au moins une plaque négative est réalisée selon l'une quelconque des revendications 1 à 2.

5. Procédé de fabrication d'une plaque d'électrode pour une batterie acide-plomb comprenant :
la formation d'un collecteur de courant à partir d'une mousse de carbone ou d'une mousse de graphite, dans lequel le collecteur de courant comprend une patte, et
la mousse de carbone ou la mousse de graphite comprend un réseau de pores ;
la formation d'une connexion électrique au niveau de la patte du collecteur de courant ;
l'application d'une pâte chimiquement active sur le collecteur de courant de manière que la pâte chimiquement active pénètre dans le réseau de pores en mousse de carbone, dans lequel la pâte chimiquement active comprend de l'oxyde de plomb ou d'autres oxydes de plomb.

6. Procédé selon la revendication 5, dans lequel l'étape de formation de la connexion électrique comprend en outre :
l'application d'un premier matériau conducteur sur la patte, et
l'application d'un deuxième matériau conducteur sur le premier matériau conducteur.

7. Procédé selon la revendication 6, dans lequel le premier matériau conducteur comprend de l'argent et est appliqué sur la patte sous la forme d'une projection thermique, et le deuxième matériau conducteur comprend du plomb.
